## Europäisches Patentamt

## European Patent Office

## Office européen des brevets

(19)

(11) Numéro de publication: **0 141 940**
**B1**

(12) **FASCICULE DE BREVET EUROPEEN**

(45) Date de publication du fascicule du brevet:
**07.01.88**

(21) Numéro de dépôt: **84110180.1**

(22) Date de dépôt: **27.08.84**

(51) Int. Cl.⁴: **F 17 D 3/10,** F 17 D 3/12,
G 01 N 1/20

(54) Dispositif destiné à permettre de prélever un liquide d'un conduit qui le contient ou à injecter un liquide dans ledit conduit.

(30) Priorité: **13.09.83 CH 4976/83**

(43) Date de publication de la demande:
**22.05.85 Bulletin 85/21**

(45) Mention de la délivrance du brevet:
**07.01.88 Bulletin 88/1**

(84) Etats contractants désignés:
**AT DE FR GB IT LU NL SE**

(56) Documents cités:
**EP - A - 0 050 028**
**DE - C - 929 398**
**DE - C - 3 142 875**
**FR - A - 1 501 245**
**FR - A - 1 517 564**
**FR - A - 2 067 722**
**GB - A - 907 495**
**US - A - 2 441 483**

(73) Titulaire: **Masson, Guy, CH-1931 Sarreyer (CH)**

(72) Inventeur: **Masson, Guy, CH-1931 Sarreyer (CH)**

(74) Mandataire: **Robert, Jean S., 51, route du Prieur,
CH-1257 Landecy (Genève) (CH)**

ACTORUM AG

## Description

La présente invention a pour objet un dispositif destiné à permettre de prélever un liquide d'un conduit qui le contient ou à injecter un liquide dans ledit conduit comprenant une vanne se montant sur ledit conduit, dont le corps est traversé de part en part par la tige d'un pointeau mobile axialement, une extrémité de ladite tige présentant une pointe tronconique d'obturation d'un passage traversant que présente le corps, l'autre extrémité étant reliée à des moyens externes de commande permettant d'actionner ledit pointeau, des moyens d'étanchéité étant interposés entre ladite tige et ledit corps.

Des dispositifs de ce genre sont connus en soi, comme cela apparaît par exemple du DE-C-3142875.

De tels dispositifs trouvent leur application en particulier dans le domaine de la chimie ou de l'industrie nucléaire où, lors de processus de fabrication, il convient de prélever des échantillons de liquide, souvent nocifs, avec lesquels non seulement l'opérateur ne doit pas entrer en contact, mais dont les émanations mêmes peuvent être dangereuses.

L'inconvénient des dispositifs connus réside dans le fait que, lors des opérations de prélèvement ou d'injection, des fuites de liquide risquent de se produire, notamment par le phénomène de ce que l'on appelle la «goutte pendante». Il s'agit de la quantité résiduelle de liquide qui apparaît à la sortie du passage traversant lorsque le pointeau est refermé après l'opération de prélèvement ou d'injection.

Le but de la présente invention est d'éviter cet inconvénient.

Ce but est atteint grâce au fait que, dans le dispositif suivant l'invention, l'agencement du pointeau est tel que, lorsqu'il est fermé, la face terminale de sa pointe tronconique affleure l'extrémité externe du passage traversant.

Le dessin représente, à titre d'exemple, plusieurs formes d'exécution de l'objet de l'invention.

La fig. 1 est une coupe d'une première forme d'exécution d'un dispositif de prélèvement pour liquide toxique;

la fig. 2 représente, très schématiquement, une installation de chimie munie du dispositif de prélèvement de la fig. 1;

la fig. 3 est une vue en élévation, avec coupe partielle, d'une deuxième forme d'exécution de dispositif de prélèvement;

la fig. 4 est une coupe axiale d'une troisième forme d'exécution de dispositif de prélèvement, dont seule la vanne a été représentée, et

la fig. 5 est une vue en élévation, avec coupe partielle, d'une quatrième forme d'exécution comprenant des moyens permettant d'injecter un liquide dans le conduit ou d'en prélever.

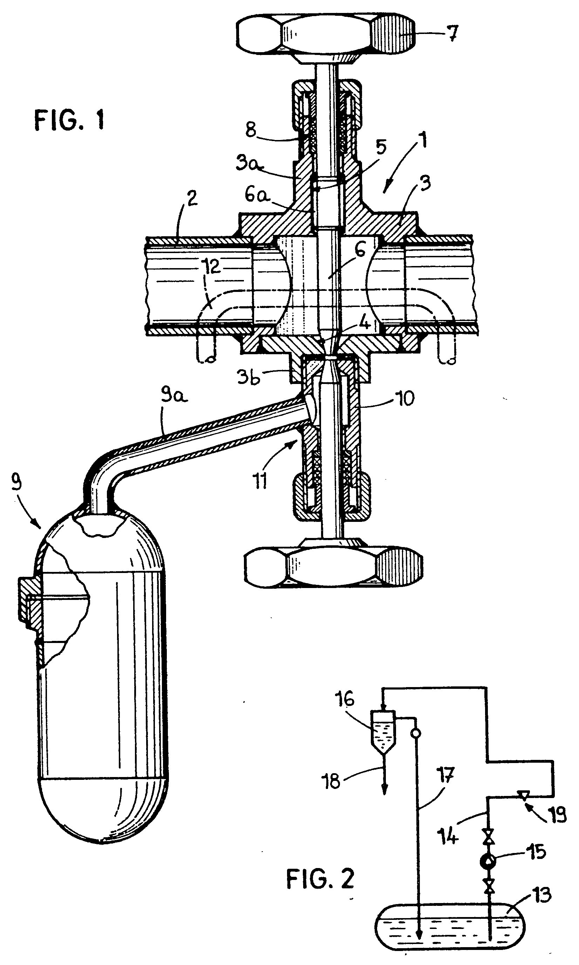

Le dispositif de prélèvement représenté à la fig. 1 comprend une vanne, désignée d'une façon générale par 1, se montant sur un conduit 2 appartenant à une installation de chimie. Le corps de cette vanne, cylindrique, désigné par 3, est percé, à sa partie inférieure, d'un passage traversant 4.

Le corps 3 présente, diamétralement opposé au passage 4, un collet 3a, taraudé intérieurement en 5, traversé par une partie filetée 6a de la tige 6 d'un pointeau obturant le passage 4. Un volant de commande 7 est monté sur l'extrémité postérieure de la tige du pointeau et permet ainsi de produire les déplacements axiaux de celui-ci et, par conséquent, d'ouvrir et de fermer le passage 4, par rotation dans un sens ou dans l'autre. Un presse-étoupe 8 assure l'étanchéité du passage de la tige 6 du pointeau.

Le dispositif de prélèvement comporte en outre un récipient, désigné d'une façon générale par 9, se prolongeant par une partie tubulaire 9a dont l'extrémité est fixée au corps 10 d'une vanne à pointeau désignée d'une façon générale par 11. Le corps 10 est destiné à s'engager dans un collet 3b que présente le corps 3 de la vanne 1, situé au droit du passage 4, c'est-à-dire diamétralement opposé au collet 3a.

En variante, la vanne 1 pourra être traversée par un conduit, tel le conduit 12 indiqué en traits mixtes à la fig. 1, destiné à assurer la circulation d'un fluide de réchauffement dont le but est d'empêcher la cristallisation du liquide de prélèvement, certains produits cristallisant à des températures voisines de 20 °C.

Lors de prélèvements d'échantillons du liquide traversant le conduit 2, on engage l'extrémité du corps 10 de la vanne 11 du récipient 9 dans le collet 3b et on ouvre la vanne 11. On ouvre ensuite le pointeau 6 et le liquide d'échantillon s'écoule alors dans le récipient 9. On ferme enfin le pointeau 6 puis la vanne 11 de sorte que le prélèvement s'effectue non seulement sans qu'aucune goutte du liquide ne s'échappe mais même sans qu'aucune émanation ne se produise. En outre, lorsque le pointeau 6 est refermé, il n'emprisonne aucun volume mort de liquide qu'il faudrait purger lors du prélèvement suivant.

La fig. 2 représente une installation de chimie dans laquelle est intégré le dispositif de prélèvement de la fig. 1.

Cette installation comprend un réservoir 13 contenant un produit de réaction tel que, par exemple, un liquide contenant des gaz phosgènes ou du dichloréthane, destiné à être acheminé, par un conduit 14, et à l'aide d'une pompe 15, dans une «nourrice» 16. Un trop-plein 17 ramène le surplus du produit dans le réservoir 13 alors qu'une canalisation 18 en communication avec le fond de la nourrice 16 conduit le produit vers l'équipement de chimie où il doit être employé. Le dispositif de prélèvement d'échantillon du produit, indiqué schématiquement en 19 à la fig. 2, et qui correspond au dispositif de la fig. 1, est monté sur le conduit 14 et permet d'effectuer un échantillonnage du produit sans risque que l'opérateur entre en contact avec celui-ci ou même que se produisent les moindres émanations nocives.

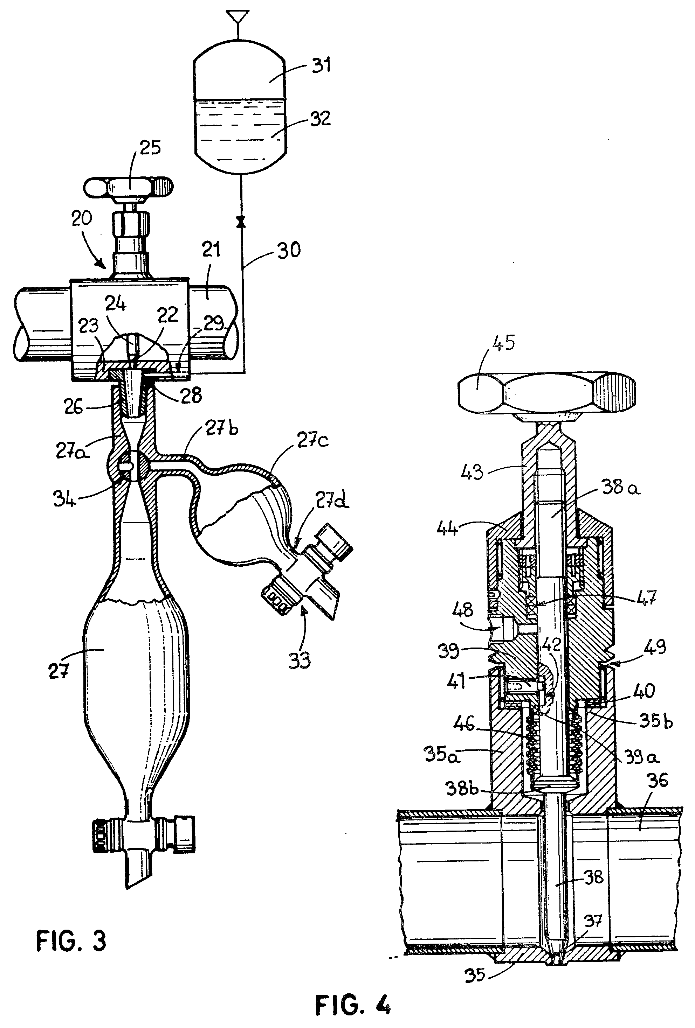

Le dispositif de prélèvement représenté à la fig. 3 comprend une vanne 20, analogue à la vanne 1 de la première forme d'exécution, se montant sur un conduit 21. Le passage de prélèvement, désigné par 22, ménagé dans le corps 23 de la vanne, est fermé par un pointeau 24 actionnable par un volant de commande 25. Le corps 23 de la vanne porte, situé en regard du passage 22, un embout 26 destiné à s'engager dans le col, désigné par 27a, d'un récipient de prélèvement 27. Le corps 23 et l'embout 26 sont percés d'un conduit 28, respectivement 29, reliés par une canalisation 30 à un réservoir 31 contenant un liquide de lavage 32. Ce dernier peut ainsi être envoyé, après le prélèvement de l'échantillon, sur l'orifice du passage de prélèvement 22 pour le nettoyer.

Le col 27a du récipient 27 présente une dérivation 27b se prolongeant par une ampoule 27c formant réceptacle pour le liquide de nettoyage. Ce dernier est évacué par une tubulure de vidange 27d sur laquelle est montée une vanne 33 actionnable manuellement. Un robinet à trois voies 34, actionnable manuellement, peut être amené dans deux positions différentes, l'une, représentée au dessin, où la dérivation 27b est fermée et où le récipient 27 est ouvert, ce qui correspond à la position de prélèvement, et l'autre où la dérivation est ouverte et le récipient fermé, ce qui est la position de rinçage.

Dans la forme d'exécution de la fig. 4, la vanne représentée comporte un corps cylindrique 35 monté sur un conduit 36 contenant le fluide dont on désire prélever des échantillons. Ce corps 35 est percé d'un passage traversant 37 obturé par un pointeau 38.

Le corps 35 de la vanne présente, diamétralement opposé au passage 37, un collet 35a dans lequel est vissé un bouchon 39 qui prend appui sur un épaulement intérieur 35b que présente le collet 35a par l'intermédiaire d'une garniture d'étanchéité 40. Le bouchon 39 porte une vis radiale 41 engagée dans une gorge longitudinale 42 que présente le pointeau 38 pour empêcher ce dernier de tourner sur lui-même. Une pièce de commande 43, en forme de douille taraudée intérieurement, est montée rotativement sur le bouchon 39 sur lequel elle est maintenue par une virole 44. Cette pièce de commande 43, solidaire d'un volant 45 actionnable manuellement, se visse sur l'extrémité 38a, filetée, du pointeau 38 de sorte que, en tournant ce volant 45 dans un sens ou dans l'autre, on produit des déplacements axiaux, dans un sens ou dans l'autre, du pointeau 38.

L'étanchéité de la vanne est assurée par un soufflet 46 déformable axialement, réalisé en une matière résistant aux effets du liquide à prélever, qui se fixe d'une part à un épaulement annulaire 38b que présente le pointeau et d'autre part à un canon 39a que présente le bouchon 39 à sa partie inférieure. Pour le cas où des fuites viendraient à se produire au niveau du soufflet 46, la vanne est encore munie d'une presse-étoupe 47 assurant l'étanchéité entre le pointeau 38 et le bouchon 39.

Ce dernier est percé d'un passage radial fileté 48 dans lequel peut se fixer un conduit menant à un analyser de gaz agencé de façon à détecter tout gaz émanant du liquide à prélever et, par conséquent, à détecter tout défaut d'étanchéité du soufflet 46.

En variante, la garniture l'étanchéité 40 pourrait être remplacée par une soudure annulaire, appliquée en 49, entre le bouchon 39 et le collet 35a du corps 35 de la vanne. Dans ce cas, la vis 41 devrait se trouver plus haut, le long du bouchon 39, de manière à être située au-delà du joint étanche constitué par la soudure.

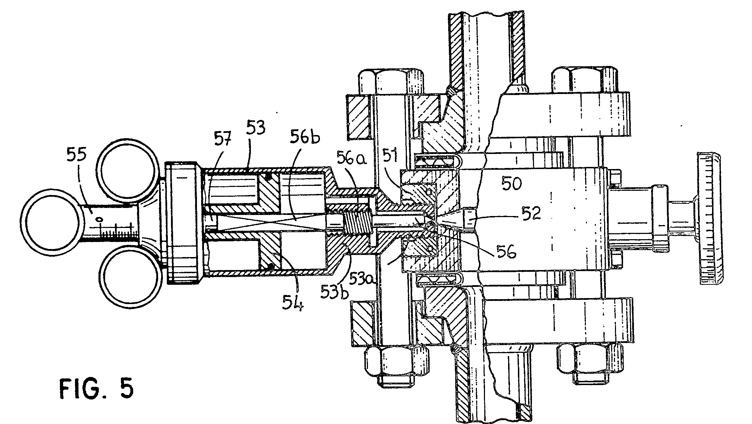

Dans la forme d'exécution de la fig. 5, le corps de vanne, désigné par 50, présente une ouverture taraudée 51, située dans le prolongement du trou obturable par le pointeau, lequel est désigné par 52. Cette ouverture taraudée est destinée à recevoir l'embout, fileté, désigné par 53a, du corps d'une seringue 53 dont le piston, désigné par 54, est actionnable à l'aide d'une tige 55. Cette seringue contient un pointeau 56 présentant une partie filetée 56a se vissant dans une partie taraudée 53b du corps 53. Ce pointeau se termine par une partie 56b, de section carrée, engagée dans un passage longitudinal 57, de section correspondante, ménagé dans le piston. Ainsi, en faisant tourner la tige du piston 55 et, par conséquent, le piston lui-même, on entraîne en rotation le pointeau 56 qui se visse plus ou moins profondément dans la partie 53b du corps de seringue. Le pointeau peut ainsi être amené à obturer l'extrémité de la seringue, ce qui permet, aussi bien après une injection de liquide qu'après un prélèvement, d'empêcher toute perte de liquide, l'extrémité du pointeau 56 de la seringue venant pratiquement en contact avec l'extrémité du pointeau 52 de la vanne de prélèvement ou d'injection.

Il est à remarquer que la vanne, quelle que soit la forme d'exécution considérée, pourra être motorisée, c'est-à-dire que son ouverture et sa fermeture pourront être commandées par un moteur au lieu l'être assurées manuellement.

## Revendications

1. Dispositif destiné à permettre de prélever un liquide d'un conduit (2; 21) qui le contient ou à injecter un liquide dans ledit conduit (2; 21) comprenant une vanne (1; 20) se montant sur ledit conduit (2; 21), dont le corps (3; 23; 25) est traversé de part en part par la tige d'un pointeau (6; 24; 38) mobile axialement, une extrémité de ladite tige présentant une pointe tronconique d'obturation d'un passage traversant (4; 22; 37) que présente le corps (3; 23; 35), l'autre extrémité étant reliée à des moyens externes de commande (7; 25; 45) permettant d'actionner ledit pointeau, des moyens d'étanchéité (8; 47) étant interposés entre ladite tige et ledit corps (3; 23; 35), caractérisé par le fait que l'agencement du pointeau (6; 24; 38) est tel que, lorsqu'il est fermé, la face terminale de sa pointe tronconique affleure l'extrémité externe dudit passage traversant (4; 22; 37).

2. Dispositif suivant la revendication 1, caractérisé par le fait que la partie postérieure de la tige (6) du pointeau traverse la paroi du corps (3) de la vanne, lequel est cylindrique, en un point diamétralement opposé à celui où est situé ledit passage (4), l'étanchéité entre le corps (3) de la vanne et ledit pointeau (6) étant assurée par un presse-étoupe (8).

3. Dispositif suivant la revendication 2, caractérisé par le fait que le corps (3) de la vanne présente, à l'endroit où il est traversé par le pointeau (6), un taraudage intérieur (5) dans lequel se visse une partie filetée de la tige du pointeau, de manière qu'en faisant tourner ce dernier dans un sens ou dans l'autre on produise les déplacements axiaux du pointeau.

4. Dispositif suivant la revendication 1, caractérisé par le fait que le pointeau (6) est solidaire d'un soufflet (46) déformable axialement dont l'extrémité est fixée, en un assemblage étanche, au corps (35) de la vanne.

5. Dispositif suivant la revendication 4, caractérisé par le fait que le corps (35) de la vanne porte, montée rotativement sur lui, une pièce de commande (43) se vissant sur l'extrémité postérieure, filetée, d'une tige (38a) d'actionnement du pointeau (38), de manière que la rotation de cette pièce (43) dans un sens ou dans l'autre, produise les déplacements axiaux de ladite tige (38a).

6. Dispositif suivant la revendication 4, caractérisé par le fait que la vanne présente des moyens (48) permettant de relier sa partie située au-delà du soufflet (46), par rapport à sa partie traversée par le liquide à prélever ou à injecter, à un analyseur de gaz destiné à détecter toute émanation de gaz provenant de ce liquide et, de ce fait, tout défaut l'étanchéité que pourrait présenter le soufflet (46).

7. Dispositif suivant la revendication 1, caractérisé par le fait que ladite vanne est traversée par un conduit (12) destiné à recevoir un fluide de réchauffement du liquide à prélever.

8. Dispositif suivant la revendication 1, caractérisé par le fait qu'il comprend un récipient de prélèvement (27) présentant un col (27a) dont l'extrémité est conformée de façon à pouvoir venir en contact étroit avec la zone (26) du corps (23) de la vanne dans laquelle débouche le passage (22) qui le traverse.

9. Dispositif suivant la revendication 7, caractérisé par le fait que le corps (23) de la vanne est percé d'un conduit (28, 29) ouvrant au voisinage du débouché du passage de prélèvement (22), destiné à permettre d'acheminer, sur l'orifice dudit passage, un liquide de rinçage.

10. Dispositif suivant les revendications 7 et 9, caractérisé par le fait que le col (27a) du récipient de prélèvement (27) présente une dérivation (27b) permettant l'évacuation du liquide de rinçage, une vanne à trois voies (34) servant à assurer et à interrompre la communication du récipient (27) avec l'extérieur permettant également d'assurer et d'interrompre la communication de ladite dérivation (27b) avec l'extérieur du récipient (27), d'agencement étant tel que, selon la position qu'occupe ladite vanne à trois voies (34), le récipient (27) est soit ouvert et la dérivation (27b) fermée, soit fermé et la dérivation (27b) ouverte.

**Patentansprüche**

1. Vorrichtung zur Entnahme von Flüssigkeit aus einer Leitung (2; 21) oder zum Einspritzen einer Flüssigkeit in diese Leitung (2; 21), mit einem Ventil (1; 20), das auf dieser Leitung (2; 21) vorgesehen ist, dessen Körper (3; 23; 35) zur Gänze von der Stange eines Nadelventils (6; 24; 38) durchquert wird, die in axialer Richtung beweglich ist, wobei ein Ende der Stange eine konische Spitze aufweist, die einen Durchlass (4; 22; 37) des Körpers (3; 23; 35) verschliessen kann, während das andere Ende mit einem äusseren Betätigungsmittel (7; 25; 45) verbunden ist, welches es gestattet, das Nadelventil zu betätigen, wobei Dichtmittel (8; 47) zwischen der Stange und dem Körper (3; 23; 35) vorgesehen sind, dadurch gekennzeichnet, dass das Nadelventil (6; 24; 38) so angeordnet ist, dass es in seinem geschlossenen Zustand mit der Endfläche seines konischen Endes in der äusseren Endebene der Öffnung (4; 22; 37) liegt.

2. Vorrichtung nach Anspruch 1, dadurch gekennzeichnet, dass der hintere Teil der Stange (6) des Nadelventils die Wand des zylinderförmigen Ventilkörpers (3) in einem Punkt diametral gegenüber dem Durchlass (4) durchstösst, und dass die Dichtigkeit zwischen dem Ventilkörper (3) und dem Nadelventil (6) durch eine Stopfbüchse (8) sichergestellt wird.

3. Vorrichtung nach Anspruch 2, dadurch gekennzeichnet, dass der Ventilkörper (3) an der Stelle, wo er vom Nadelventil (6) durchstossen wird, ein Innengewinde (5) aufweist, in das sich ein mit einem Gewinde versehener Teil der Nadelventilstange schraubt, so dass beim Drehen der letzteren in einer Richtung oder in der anderen eine axiale Verschiebung des Nadelventils erfolgt.

4. Vorrichtung nach Anspruch 1, dadurch gekennzeichnet, dass das Nadelventil (6) einen in Axialrichtung deformierbaren Balg (46) aufweist, dessen Ende dicht am Ventilkörper (35) angebracht ist.

5. Vorrichtung nach Anspruch 4, dadurch gekennzeichnet, dass der Ventilkörper (35) ein Betätigungsorgan (43) rotierbar trägt, welches sich auf das rückwärtige, mit einem Gewinde versehene Ende einer Betätigungsstange (38a) des Nadelventils (38) so schraubt, dass die Verdrehung dieser Handhabe (43) in der einen oder der anderen Richtung die axiale Verschiebung der Stange (38a) bewirkt.

6. Vorrichtung nach Anspruch 4, dadurch gekennzeichnet, dass das Ventil Mittel (48) aufweist, die es erlauben, auf seinen oberhalb des Balges (46) gelegenen Teil, bezogen auf den Teil, der durch die zu entnehmende oder einzuspritzende Flüssigkeit ragt, einen Gasanalyseapparat anzuschliessen, der dazu bestimmt ist, jegliche Verbreitung von Gas, welches aus der Flüssigkeit kommt, festzustellen und somit jegliche mögliche Undichtigkeit des Balges (46) festzustellen.

7. Vorrichtung nach Anspruch 1, dadurch gekennzeichnet, dass das Ventil von einer Leitung (12) durchquert wird, die dazu dient, ein Wärmeträgermittel für die Erwärmung der zu entnehmenden Flüssigkeit aufzunehmen.

8. Vorrichtung nach Anspruch 1, dadurch gekennzeichnet, dass sie einen Entnahmebehälter (27) aufweist, der einen Hals (27a) besitzt, dessen Ende so ausgebildet ist, dass es in engem Kontakt mit dem Bereich (26) des Ventilkörpers (23) kommen kann, in den die Öffnung (22), die den Ventilkörper durchquert, mündet.

9. Vorrichtung nach Anspruch 7, dadurch gekennzeichnet, dass der Ventilkörper (23) von einer Leitung (28, 29) durchbrochen wird, die sich in Nachbarschaft der Einmündung der Entnahmeöffnung (22) öffnet und dazu dient, an der Mündung dieser Passage Spülflüssigkeit einzubringen.

10. Vorrichtung nach Anspruch 7 und 9, dadurch gekennzeichnet, dass der Hals (27a) des Entnahmegefässes (27) eine Abzweigung (27b) aufweist, die die Abfuhr der Spülflüssigkeit gestattet, dass ein Dreiwegventil (34) vorgesehen ist, welches dazu dient, die Verbindung des Behälters (27) nach aussen sicherzustellen oder zu unterbrechen sowie die Verbindung zwischen der Abzweigung (27b) nach aussen ebenfalls sicherzustellen oder zu unterbrechen, wobei die Anordnung so getroffen ist, dass je nach der Stellung, die das Dreiwegventil (34) einnimmt, der Behälter (27) geöffnet und die Abzweigung (27b) geschlossen oder der Behälter geschlossen und die Abzweigung (27b) geöffnet ist.

## Claims

1. Device to collect samples of liquid flowing in a conduit (2; 21) or to inject a liquid into this conduit (2; 21) comprising a valve (1; 20) mounted on the said conduit (2; 21), the body (3; 23; 35) of which is traversed through by the stem of an axially movable needle member (6; 24; 38), one end of this stem being provided with a frusto-conical point for the obturation of a through passage (4; 22; 37) provided in the body (3; 23; 35), the other end being connected to outer control means (7; 25; 45) permitting to operate the said needle member, sealing means (8; 47) being interposed between the said stem and the said body (3; 23; 35), characterized by the fact that the arrangement of the needle member (6; 24; 38) is such that, when it is closed, the ending face of its frusto-conical point is flush with the outer end of the said through passage (4; 22; 37).

2. Device according to claim 1, characterized by the fact that the rear part of the stem (6) of the needle member passes through the wall of the body (3) of the valve, which is cylindrical, at a point situated diametrically opposite to the point at which said passage (4) is situated, the seal between the body (3) of the valve and said needle member (6) being ensured by a stuffing box (8).

3. Device according to claim 2, characterized by the fact that the body (3) of the valve is provided, at the place where it is traversed by the needle member (6), with an internally tapped bore (5) in which is screwed a threaded portion of the stem of the needle member, so that rotation of the needle member in one sense or the other produces acial displacements of the needle member.

4. Device according to claim 1, characterized by the fact that the needle (6) is rigid with an axially deformable bellows (46) the end of which is secured, in a sealed manner, to the body (35) of the valve.

5. Device according to claim 4, characterized by the fact that the body (35) of the valve carries, rotatably mounted thereon, a control member (43) which is screwed on the screw-threaded rear portion of an operating stem (38a) of the needle member (38), so that rotation of this control member (43), in one sense or the other, produces axial displacements of said stem (38a).

6. Device according to claim 4, characterized by the fact that the valve is provided with means (48) enabling connection of its portion situated beyond the sealing bellows (46), with respect to its portion traversed by the liquid to be collected or to be injected, to a gas analyzer intended to detect any emanation of gas from the said liquid and, hence, any leakage of the sealing bellows (46).

7. Device according to claim 1, characterized by the fact that said valve is traversed by a conduit (12) adapted for receiving a heating fluid to heat the liquid to be collected.

8. Device according to claim 1, characterized by the fact that it comprises a sampling vessel (27) provided with a collar (27a) the end of which is arranged in such a way as to be able to come in close contact with the area (26) of the body (23) of the valve in which opens the passage which passes through it.

9. Device according to claim 7, characterized by the fact that the body (23) of the valve is pierced with a conduit (28, 29) opening in the neighbourhood of the opening of the sampling passage (22), for enabling a cleaning liquid to be fed to the opening of said passage.

10. Device according to claims 7 and 9, characterized by the fact that the collar (27a) of the sampling vessel (27) is provided with a branch (27b) enabling the evacuation of the cleaning liquid, a three-way valve (34) serving to open and to close the communication of the vessel (27) with the outside serving also to open and to close the communication of said branch (27b) with the outside of the vessel (27), the arrangement being such that, according to the position of said three-way valve (34), either the vessel (27) is open and the branch (27b) closed, or closed and the branch (27b) open.

FIG. 1

FIG. 2

FIG. 3

FIG. 4

FIG. 5